Europäisches Patentamt

European Patent Office

Office européen des brevets

(11) Veröffentlichungsnummer: **0 455 940 B1**

# EUROPÄISCHE PATENTSCHRIFT

(45) Veröffentlichungstag der Patentschrift: **07.09.94**

(51) Int. Cl.5: **C04B 28/02**

(21) Anmeldenummer: **91101597.2**

(22) Anmeldetag: **06.02.91**

(54) **Verfahren zur Herstellung einer Zementsuspension für eine Verpressung von Rissen in Steinmaterial.**

(30) Priorität: **30.04.90 DE 4013871**

(43) Veröffentlichungstag der Anmeldung:
**13.11.91 Patentblatt 91/46**

(45) Bekanntmachung des Hinweises auf die
Patenterteilung:
**07.09.94 Patentblatt 94/36**

(84) Benannte Vertragsstaaten:
**AT BE CH DE DK ES FR GB GR IT LI LU NL SE**

(56) Entgegenhaltungen:
DE-A- 2 527 546
DE-A- 2 756 695
US-A- 4 019 327

(73) Patentinhaber: **FIRMA RÖDL GmbH**
**Wetzendorfer Strasse 220**
**D-90427 Nürnberg (DE)**

(72) Erfinder: **Rosa, Walter, Dipl.-Ing.**
**Sassnitzer Strasse 22**
**W-8500 Nürnberg 90 (DE)**

(74) Vertreter: **Böhme, Volker, Dipl.-Ing. et al**
**Patentanwälte**
**Dipl.-Ing. E. Kessel**
**Dipl.Ing. V. Böhme**
**Karolinenstrasse 27**
**D-90402 Nürnberg (DE)**

EP 0 455 940 B1

EP 0 455 940 B1

**Beschreibung**

Die Erfindung betrifft ein Verfahren zur Herstellung einer Zementsuspension für eine Verpressung von Rissen in wasseraufnehmendem Steinmaterial, bei dem pulveriger Feinzement, Verflüssiger, Quellmittel, Quarzmehl und Wasser zu der Zementsuspension vermischt werden und die Suspension frei von grobteilchenförmigen Zuschlägen wie Fasern gehalten wird, bei dem die angefallene Zementsuspension einem Nachmischvorgang unterzogen wird, der auf mindestens sieben Minuten verlängert wird und bei dem die Temperatur der Zementsuspension kontrolliert und auf maximal 30° C gekühlt wird.

Bei einem bekannten (DE-Zeitschrift "Beton- und Stahlbetonbau, 1954, S. 205-210) Verfahren dieser Art wird außer den genannten Bestandteilen im wesentlichen kein weiterer Bestandteil zugemischt. Für den Feinzement wird eine Mahlfeinheit in Bezug auf Maschenweiten von 0,09 mm und 0,06 mm angegeben. Es werden 25 GT Quarzmehl auf 100 GT Feinzement zugegeben. Das Quellmittel ist Bentonit und wird mit 3 GT auf 100 GT Feinzement zugegeben und zwar wird das Bentonit 24 Stunden lang mit dem Wasser vorgequollen. Die nach diesem Verfahren hergestellte Zementsuspension läßt sich in Risse bis minimal 0,5 mm Rißweite in brauchbarer Weise verpressen. Wird die Rißweite geringer, so befindet sich im Riß eine wasserarme, bröckelige Masse, die nach der Aushärtung weder den Riß dicht bzw. voll füllt, noch die Rißwandungen fest klebend zusammenhält. Die Zementsuspension ergibt eine ausgehärtete Rißfüllung, die nicht homogen ist und nur relativ geringe Zusammenhaltekraft und Kraftschlüssigkeit zwischen den Rißwänden entfaltet. Dies beruht darauf, daß das wasseraufnehmende Steinmaterial der Zementsuspension zuviel Wasser entzieht, bevor sie zu den feinen Rissen von 0,3 mm Rißweite oder weiter gelangt. Das umgebende Steinmaterial entzieht während des Verpreßvorganges und während der Erhärtung (Hydratation) der Zementsuspension Wasser und hindert sie am Erhärten. Dies tritt bei Fels und bei dem sehr saugfähigen Mauerwerk und insbesondere bei Betonbauteilen auf, bei denen auch feine Risse zu verpressen sind.

Es ist auch ein Verfahren zur Herstellung einer Zementsuspension bekannt (DE-AS 27 56 695), bei dem pulverartiger Normalzement, Füllstoff wie Flugasche, Fasern, Polyethylenoxid und Wasser zusammengemischt werden und bei dem zunächst das Wasser mit Polyethylenoxid eines Molekuargewichtes von mindestens 500 000 versetzt wird und der Nachmischvorgang auf acht Minuten verlängert wird, wobei auf 100 l Wasser ca. 40 g Polyethylenoxid und mindestens 180 kg Normalzement zugegeben werden und über die Temperatur beim Nachmischvorgang keine Angaben gemacht sind. Es wird relativ viel Polyethylenoxid pro 100 GT Normalzement gebraucht. Hier dient das Polyethylenoxid dazu, die Fasern in der Zementsuspension zu dispergieren, und soll ein Zementprodukt geschaffen werden, das eine verbesserte Druckausdehnung und eine verbesserte Druckfestigkeit gegen Reißen und Splittern aufweist.

Eine Aufgabe der Erfindung ist es demgegenüber, ein Verfahren der eingangs genannten Art zu schaffen, dessen Zementsuspension in Rissen, und zwar auch sehr viel kleinerer Rißweite, eine Rißfüllung kompakterer Konsistenz und verbesserter Zusammenhaltekraft und Kraftschlüssigkeit ergibt. Das erfindungsgemäße Verfahren ist, diese Aufgabe lösend, dadurch gekennzeichnet, daß zunächst das Wasser mit wasserrückhaltendem Polyethylenoxid eines Molekulargewichtes von mindestens 40 000 versetzt wird, wobei auf 100 GT Feinzement 0,040-0,090 GT Polyethylenoxid zugegeben werden, daß der Feinzement und das Quarzmehl mit einer Korngröße kleiner 40 μm vorgesehen werden und auf 100 GT Feinzement nur 1,5 - 3,2 GT Quarzmehl zugegeben werden und daß das Quellmittel erst zur Mischung der Zementsuspension zugegeben wird.

Mit der erfindungsgemäß hergestellten Zementsuspension lassen sich feine Steinmaterial-Risse, bei Betonbauteilen bis zu einer Rißweite von 0,1 mm, bei kompakterer Konsistenz und verbesserter Zusammenhaltekraft der ausgehärteten Rißfüllung bzw. kraftschlüssigerem Verbinden der Rißufer verpressen. Durch das Kühlen und Inbewegunghalten wird trotz des langen Nachmischvorganges und der feinen Konsistenz des Zementes und auch bei Fehlen eines Abbindeverzögerers ein vorzeitiges Abbinden verhindert. Die Temperaturkontrolle und das Kühlen erfolgen während des gesamten Nachmischvorganges. Es wird relativ wenig Polyethylenoxid pro 100 GT Feinzement benötigt. Es wird auch bei Rissen sehr kleiner Rißweite mit Sicherheit kraftschlüssige Verbindung der Rißufer, d.h. der den Riß begrenzenden Rißwandungen erreicht. Das Quarzmehl führt mit seinem geringen Gewichtsanteil zu einer erheblichen Verbesserung der Endfestigkeit.

In manchen Fällen bringt Wasser mit der normalen Trinkwasserqualität die erwünschte Wirkung nicht in einem ausreichend hohen Ausmaß. Deshalb ist es besonders zweckmäßig und vorteilhaft, wenn ein Wasser, das frei von Chlorverbindungen, z.B. entchlort ist, und demineralisiert, z.B. ausreichend frei von Mineralien ist, verwendet wird. Dieses wirklich reine Wasser stellt sicher, daß die erwünschte Wirkung, nämlich ausreichende Wasserrückhaltung der Zementsuspension bis zu Rißweiten von 0,1 mm ausgeprägt auftritt. Demineralisiertes Wasser ist in der Regel durch Filtern von Mineralien befreites Wasser.

2

Besonders zweckmäßig und vorteilhaft ist es, wenn das im Wasser verteilte Polyethylenoxid für eine Zeitspanne von mindestens 24 Stunden stehengelassen wird. Dies verbessert die Lösung des Polyethylenoxids im Wasser. Die Lösung wird durch Zugabe weiteren Wassers auf die für die Zementsuspension erforderliche Gesamtwassermenge ergänzt. Nach dem Stehenlassen wird das Wasser vor der weiteren Verarbeitung umgerührt, um die Verteilung des Polyethylenoxids im Wasser zu vergleichmäßigen.

Besonders zweckmäßig und vorteilhaft ist es auch, wenn das Wasser mit dem Polyethylenoxid nach dem Zusetzen für mindestens vier Minuten hochtourig gemischt wird. Dies fördert ebenfalls die Lösung des Polyethylenoxids im Wasser und damit die vom Polyethylenoxid in der Zementsuspension im Riß erwünschte Wirkung der Wasserrückhaltung.

Besonders zweckmäßig und vorteilhaft ist es sodann, wenn sich beim Nachmischvorgang nach einem hochtourigeren Mischvorgang ein niedertourigerer Mischvorgang anschließt. Der niedertourigere Mischvorgang ist eine Art kolloidaler Aufschließung von kleinen Zementklumpen durch Scheren oder Zerschlagen. Dem niedertourigeren Mischvorgang muß der hochtourigere Mischvorgang vorhergehen. Der niedertourigere aufschließende Mischvorgang läßt sich mit einem Mischwerkzeug oder einer Kreiselpumpe, welche die Zementsuspension umwälzt, durchführen. Der niedertourigere Mischvorgang dauert mindestens 15 Minuten.

Dem mit dem Polyethylenoxid versetzten Wasser wird zunächst eine pulverige Komponente zugemischt. Wenn der Verflüssiger flüssig ist, wird er stets erst zugegeben, wenn in das Wasser zumindest eine pulverige Komponente: Feinzement, Quarzmehl und/oder Quellmittel, eingemischt ist.

Das Quarzmehl weist in der Regel mit 95 M.-% Teilchen kleiner 40 $\mu$m und zu 50 M.-% Teilchen kleiner 1 $\mu$m auf. Das Quarzmehl, das man als Micro-Silica bezeichnen kann, weist also einen hohen Prozentsatz an Teilchen auf, die um ein 10-faches kleiner sind als die Teilchen des Feinzementes. Das Quarzmehl ist z.B. reines Siliziumdioxid. Besonders zweckmäßig und vorteilhaft ist es jedoch, wenn das Quarzmehl, abgesehen von Siliziumdioxid ($SiO_2$), bis zu ingesamt 10 M.-% weitere Bestandteile der Reihe: $Fe_2O_3$, MgO, $K_2O$, CaO, $Na_2O$ oder $Al_2O_3$ enthält. Ein derartiges mehrkomponentiges Quarzmehl verbessert die Verbindungskraft des abgebundenen Materials im Riß ganz erheblich.

Das Quarzmehl weist z.B. folgende Zusammensetzung auf:

| | | | | |
|---|---|---|---|---|
| $SiO_2$ | 92 | bis | 97 | M.-% |
| $Al_2O_3$ | 0,03 | bis | 0,30 | M.-% |
| $Fe_2O_3$ | 1,10 | bis | 4,60 | M.-% |
| $TiO_2$ | | $\leq$ | 0,01 | M.-% |
| CaO | 0,40 | bis | 0,85 | M.-% |
| MgO | 0,95 | bis | 1,45 | M.-% |
| $K_2O$ | 0,50 | bis | 0,60 | M.-% |
| $Na_2O$ | 0,30 | bis | 0,50 | M.-% |
| Cl | 0,025 | bis | 0,040 | M.-% |
| Glühverlust | 1,10 | bis | 1,45 | M.-% |
| $SO_3$ | 0,35 | bis | 0,40 | M.-% |
| C | 0,60 | bis | 1,00 | M.-% |

Unter Feinzement ist hier ein Zement mit einer Korngröße < 40 $\mu$m, vorzugsweise < 20 $\mu$m, z.B. von < 16 $\mu$m oder < 9 $\mu$m, zu verstehen, wogegen Normalzement eine Korngröße > 50 $\mu$m, z.B. von 63 $\mu$m, hat. Das Steinmaterial ist in der Regel vorzugsweise ein Stahlbetonbauteil, kann aber auch Fels- oder Mauerwerk sein, soweit hier Risse zu verpressen sind. Es geht der Erfindung also nicht alleine um ein Verfahren zur Herstellung einer Zementsuspension für eine Verpressung von Rissen oder anderen Hohlräumen in Steinmaterial, sondern auch um ein Verfahren zur Herstellung einer in einem Steinmaterial-Hohlraum, insbesondere Riß, verpreßten Füllung auf Zementbasis. In das versetzte Wasser werden der Feinzement, das Quarzmehl und das Quellmittel, die miteinander vorgemischt sein können, eingegeben. Der Verflüssiger ist z.B. pulverförmig oder zumeist flüssig. Unmittelbar nach dem Zugeben des Verflüssigers wird in der Regel mit einem hochtourigen Rührwerk für mindestens drei Minuten gemischt, wobei unter hochtourig mehr als 3 000 U/min zu verstehen sind. Auf 100 l Wasser werden z.B. 164 kg Feinzement zugegeben.

Bei einem Ausführungsbeispiel der Erfindung wird zunächst hochmolekulares Polyethylenoxid mit chlorfreiem, demineralisiertem Wasser zu einer Lösung vermischt, die ausreichend lange stehengelassen wird. Sodann wird in einem sauberen Gefäß demineralisiertes, von Chlorverbindungen freies Wasser mit der Wasser-Polyethylenoxid-Lösung versetzt und ca. 30 Sekunden bei 1 000 - 2 000 U/min aufgemischt. In das versetzte Wasser werden Feinzement, Quarzmehl und Quellmittel zusammen gemeinsam innerhalb einer Minute unter ständigem Rühren bei 1 000 - 2 000 U/min kontinuierlich zudosiert. Anschließend wird bei weiterlaufendem Rührwerk der Verflüssiger zugegeben und für 3 1/2 Minuten bei 4 000 - 5 000 U/min untergerührt. Diese Zementsuspension wird in einem Mischbehälter mit angeschlossener Kreiselpumpe umgewälzt und weiter aufgeschlossen und zwar während mindestens 10 Minuten. Danach ist die Suspension für das Verpressen bzw. für die Injektion gebrauchsfertig.

Damit die Temperatur der Zementsuspension 30° C nicht überschreitet, werden das zuerst genannte Gefäß und der Mischbehälter mit Wasser gekühlt. Es werden auf 100 Gewichtsteile (= GT) Feinzement 2,2 GT Quarzmehl und 0,07 GT Polyethylenoxid angesetzt und auf 100 GT Wasser 154 GT Feinzement angesetzt. Auf 100 GT Feinzement werden 0,2 - 1,5 GT Quellmittel und 3,5 - 5,5, z.B. 4,5 GT Verflüssiger angesetzt. Auch Abbindeverzögerer kann u.U. zugegeben werden.

Als Verflüssiger dienen z.B. Ligninsulfonate, Naphtalinsulfonsäure und Melaminformaldehydkondensate. Ein Verflüssiger auf Naphtalinbasis ist bevorzugt. Als Quellmittel werden primär Aluminate verwendet, die sehr feinkörnig vorliegen. Es werden 0,25 - 0,35 GT, z.B. 0,3 GT, Quellmittel, primär in Form eines Wirkstoffextraktes, verwendet. Es sind die bekannten Zementarten verwendbar; z.B. werden Zemente auf der Basis von Portlandzement verwendet. In de Regel enthält die Zementsuspension auf 100 GT Wasser 100 - 180 GT Feinzement. Die erfindungsgemäße Zementsuspension hat einen relativ hohen Wasser-Feststoff-Faktor; das Verhältnis GT Wasser/GT Feinzement ist in der Regel gleich oder größer 0,4 oder sogar gleich oder größer 0,6. Auf 100 GT Zement, wird das 2,8-fache oder auch 4-fache weniger an Polyethylenoxid verwendet als bei dem bekannten (DE-AS 27 56 695) Verfahren. Das Polyethylenoxid hat ein Molekulargewicht von 40.000 bis 50.000.000, in der Regel von mehrheitlich ca. 40.000.000. Bei Betonbauteilen lassen sich feine Risse bis zu Rißweiten von 0,1 mm in sehr guter Qualität verpressen. Die mindeste Verarbeitungstemperatur der Luft und des Steinmaterials ist + 5° C. Bei höheren Temperaturen als 30° C erstarrt der Zement zu schnell. Die Grenze zwischen niedertourigerem und hochtourigerem Mischen liegt bei ca. 3.000 U/min.

## Patentansprüche

1. Verfahren zur Herstellung einer Zementsuspension für eine Verpressung von Rissen in wasseraufnehmendem Steinmaterial, bei dem pulveriger Feinzement, Verflüssiger, Quellmittel, Quarzmehl und Wasser zu der Zementsuspension vermischt werden und die Suspension frei von grobteilchenförmigen Zuschlägen wie Fasern gehalten wird,
   bei dem die angefallene Zementsuspension einem Nachmischvorgang unterzogen wird, der auf mindestens sieben Minuten verlängert wird und bei dem die Temperatur der Zementsuspension kontrolliert und auf maximal 30° C gekühlt wird,
   **dadurch gekennzeichnet,**
   daß zunächst das Wasser mit wasserrückhaltendem Polyethlylenoxid eines Molekulargewichtes von mindestens 40.000 versetzt wird, wobei auf 100 GT Feinzement 0,040 - 0,090 GT Polyethylenoxid zugegeben werden,
   daß der Feinzement und das Quarzmehl mit einer Korngröße < 40 $\mu$m vorgesehen werden und auf 100 GT Feinzement nur 1,5 - 3,2 GT Quarzmehl zugegeben werden und
   daß das Quellmittel erst zur Mischung der Zementsuspension zugegeben wird.

2. Verfahren nach Anspruch 1, **dadurch gekennzeichnet,** daß ein Wasser, das frei von Chlorverbindungen und demineralisiert ist, verwendet wird.

3. Verfahren nach Anspruch 1 oder 2**, dadurch gekennzeichnet,** daß das im Wasser verteilte Polyethylenoxid für eine Zeitspanne von mindestens 24 Stunden stehen gelassen wird.

4. Verfahren nach Anspruch 1, 2 oder 3, **dadurch gekennzeichnet,** daß das Wasser mit dem Polyethylenoxid nach dem Zusetzen für mindestens vier Minuten hochtourig gemischt wird.

5. Verfahren nach einem der vorhergehenden Ansprüche, **dadurch gekennzeichnet,** daß sich beim Nachmischvorgang nach einem hochtourigen Michvorgang ein niedertouriger Mischvorgang anschließt.

**6.** Verfahren nach einem der vorhergehenden Ansprüche, **dadurch gekennzeichnet,** daß das Quarzmehl, abgesehen von dem Siliziumdioxid ($SiO_2$), bis zu insgesamt 10 M.-% weitere Bestandteile der Reihe $Fe_2O_3$, MgO, $K_2O$, CaO, $Na_2O$ oder $Al_2O_3$ enthält.

**7.** Verwendung der nach einem der vorhergehenden Ansprüche hergestellten Zementsuspension zur Verpressung von feinen Rissen in Betonbauteilen.

**8.** Verwendung der gemäß einem der Ansprüche 1 bis 6 hergestellten Zementsuspension zur Herstellung einer in einem Steinmaterial-Hohlraum verpreßten Hohlraumfüllung.

## Claims

**1.** A process for producing a cement suspension for pressure-grouting crevices in hydrophilic stone materials, wherein powder-form fine cement, a liquefier, a swelling agent, quartz powder and water are mixed to form the cement suspension, and the suspension is kept free from coarse-particle aggregate such as fibres,

wherein the resultant cement suspension is subjected to a subsequent mixing process, which is extended to at least seven minutes and in which the temperature of the cement suspension is controlled and cooled to a maximum of 30 °C,

**characterised in that**
- initially the water is added to water-retaining polyethylene oxide of a molecular weight of at least 40,000, and 0.040 - 0.090 parts by weight of polyethylene oxide are added per 100 parts by weight of fine cement;
- the fine cement and the quartz powder are provided with a grain size of less than 40 $\mu$m and only 1.5 - 3.2 parts by weight of quartz powder are added per 100 parts by weight of fine cement; and
- the swelling agent is only added for mixing the cement suspension.

**2.** A process in accordance with claim 1, **characterised in that** the water used is free from chlorine compounds and has been demineralised.

**3.** A process in accordance with claim 1 or 2, **characterised in that** the polyethylene oxide dispersed in the water is allowed to stand for a period of at least 24 hours.

**4.** A process in accordance with claim 1, 2 or 3, **characterised in that** after adding, the water and polyethylene oxide are mixed at high speed for at least four minutes.

**5.** A process in accordance with one of the preceding claims, **characterised in that** during the subsequent mixing process, a lower-speed mixing process takes place after a higher-speed mixing process.

**6.** A process in accordance with one of the preceding claims, **characterised in that** apart from silicon dioxide ($SiO_2$), the quartz powder contains further components from the series $Fe_2O_3$, MgO, $K_2O$, CaO, $Na_2O$ or $Al_2O_3$, up to a total of 10 % by weight [?].

**7.** Use of the cement suspension produced in accordance with one of the preceding claims, for pressure-grouting fine crevices in concrete building components.

**8.** Use of the cement suspension produced in accordance with one of claims 1 to 6, to produce a filler for hollow spaces, pressure-grouted into a hollow space in stone material.

## Revendications

**1.** Procédé de préparation d'une suspension de ciment pour jointoyer sous pression des fissures dans un matériau de pierre absorbant l'eau dans lequel on mélange un ciment fin en poudre, un fluidifiant, un agent gonflant, une poudre de quartz et de l'eau pour donner la suspension de ciment, et on n'ajoute pas à la suspension des additifs à grosses particules tels que des fibres, dans lequel on soumet la suspension de ciment à un processus de mélange ultérieur, qu'on prolonge au moins pendant 7 min et dans lequel on maîtrise la température de la suspension de ciment et on refroidit pour qu'elle ne dépasse pas 30°C, caractérisé en ce qu'on ajoute à l'eau d'abord du poly(oxyde d'éthylène) d'un poids moléculaire de 40 000 au moins, en ajoutant 0,040-0,090 partie en poids de poly(oxyde d'éthylène), que le ciment fin et la poudre de quartz ont une granulométrie inférieure à 40 $\mu$m et qu'on ajoute seulement de 1,5 à 3,2 parties en poids de poudre de quartz à 100 parries en poids de ciment fin et qu'on ajoute l'agent gonflant seulement au mélange de la suspension de ciment.

2. Procédé selon la revendication 1, caractérisé en ce qu'on utilise une eau qui est exempte de composés du chlore et qui est déminéralisée.

3. Procédé selon la revendication 1 ou 2, caractérisé en ce qu'on laisse reposer la dispersion de poly-(oxyde d'éthylène) dans l'eau pendant l'intervalle de temps d'au moins 24 h.

4. Procédé selon la revendication 1, 2 ou 3, caractérisé en ce qu'on mélange l'au et le poly(oxyde d'éthylène) après l'addition pendant 4 min au moins à grande vitesse de rotation.

5. Procédé selon l'une des revendications précédentes, caractérisé en ce que lors du processus de mélange ultérieur, on fait succéder à un processus de mélange à grande vitesse de rotation un processus de mélange à faible vitesse de rotation.

6. Procédé selon l'une des revendications précédentes, caractérisé en ce que la poudre de quartz contient, outre le dioxyde de silicium ($SiO_2$), jusqu'à en tout 10 % en poids d'autres composants de la série : $Fe_2O_3$, MgO, $K_2O$, CaO, $Na_2O$ ou $Al_2O_3$.

7. Utilisation de la suspension de ciment préparée selon l'une des revendications précédentes pour jointoyer sous pression des fissures fines dans des parties de construction en béton.

8. Utilisation de la suspension de ciment préparée selon l'une des revendications 1 à 6 pour produire un remplissage d'espace vide injecté sous pression dans un espace vide de matériau de pierre.